# EUROPEAN PATENT APPLICATION

(11) **EP 4 521 807 A1**
(43) Date of publication of application: **12.03.2025**
(21) Application number: 24198490.5
(22) Date of filing: 04.09.2024
(51) Int. Cl.: H04W 24/02, H04W 88/08

(54) **WIRELESS-DEVICE MESSAGING INDICATION OF WIRELESS CAPABILITY**

(30) Priority: 05.09.2023 US 202363536552 P; 18.03.2024 US 202463566473 P
(71) Applicant: Ruckus IP Holdings LLC, Claremont, NC 28610 (US); Khoury, Peter G., Sunnyvale, CA 94089 (US); Hamilton, Mark, Sunnyvale, CA 94089 (US)
(72) Inventor: KHOURY, Peter G., Sunnyvale, 94089 (US); HAMILTON, Mark, Sunnyvale, 94089 (US)
(74) Representative: Openshaw & Co.

(57) **Abstract**

During operation, an access point (and, more generally, a computer network device) may receive, associated with an electronic device, a frame with information specifying a capability of the electronic device, where the capability includes whether the electronic device is compatible with an Institute of Electrical and Electronics Engineers (IEEE) 802.11 standard or a Wi-Fi Alliance generation, and the access point is unable to interpret the information. Then, the access point may provide, addressed to a computer system (such as a cloud-based controller of the access point), the information. In some embodiments, the access point provides, addressed to the computer system, an identifier of the electronic device and/or one or more attributes of the electronic device.

## Description

### FIELD

The described embodiments relate to techniques for indicating the wireless capability of an electronic device (such as a station or client) to a computer network device (such as an access point).

### BACKGROUND

Many electronic devices are capable of wirelessly communicating with other electronic devices. Notably, these electronic devices can include a networking subsystem that implements a network interface for: a cellular network (UMTS, LTE, 5G Core or 5GC, etc.), a wireless local area network (e.g., a wireless network such as described in the Institute of Electrical and Electronics Engineers (IEEE) 802.11 standard or Bluetooth^{™} from the Bluetooth Special Interest Group of Kirkland, Washington), and/or another type of wireless network. For example, many electronic devices communicate with each other via wireless local area networks (WLANs) using an IEEE 802.11-compatible communication protocol (which is sometimes collectively referred to as `Wi-Fi'). In a typical deployment, a Wi-Fi-based WLAN includes one or more access points or APs (which are sometimes referred to as basic service sets or BSSs) that communicate wirelessly with each other and with other electronic devices using Wi-Fi, and that provide access to another network (such as the Internet) via IEEE 802.3 (which is sometimes referred to as `Ethernet').

In a WLAN, it is often difficult for a computer network device (such as an access point) to determine whether an electronic device (which is sometimes referred to as a 'client' or a 'station') is compatible with a particular IEEE 802.11 standard. For example, when an electronic device is compatible with a more-recent IEEE 802.11 standard than an access point, the access point may discard capability information that is provided by the electronic device to the access point.

### SUMMARY

The invention is set out in the appended set of claims.

An access point that provides information is described. This access point includes an interface circuit that communicates with an electronic device and a computer system. During operation, the access point receives, associated with the electronic device, a frame with information specifying a capability of the electronic device, where the capability comprises whether the electronic device is compatible with an IEEE 802.11 standard, and where the access point is unable to interpret the information. Then, the access point provides, addressed to the computer system, the information.

Note that the frame may be received during association between the electronic device and the access point. For example, the frame may include an association request. Alternatively, the frame may include a probe request. In some embodiments, the information is communicated after association, such as in an Action frame or a protected frame.

Moreover, the information may be included in an information element (IE). For example, the IE may include a high-efficiency field in the frame.

Furthermore, the information may include one or more reserved bits in the frame.

Additionally, the electronic device may be compatible with a more-recent IEEE 802.11 standard than the access point.

In some embodiments, the computer system may include a controller of the access point. More generally, the computer system may include a cloud-based computer system.

Moreover, the access point may provide, addressed to the computer system, an identifier of the electronic device. For example, the identifier may include a media access control (MAC) address of the electronic device. Alternatively or additionally, the access point may provide one or more attributes of the electronic device, such as: a manufacturer of the electronic device, a model of the electronic device, an operating system of the electronic device, etc.

Another embodiment provides the electronic device.

Another embodiment provides the computer system.

Another embodiment provides a computer-readable storage medium with program instructions for use with the access point, the electronic device or the computer system. When executed by the access point, the electronic device or the computer system, the program instructions cause the access point, the electronic device or the computer system to perform at least some of the aforementioned operations or counterparts to at least some of the aforementioned operations in one or more of the preceding embodiments.

Another embodiment provides a method, which may be performed by the access point, the electronic device or the computer system. This method includes at least some of the aforementioned operations or counterparts to at least some of the aforementioned operations in one or more of the preceding embodiments.

This Summary is provided for purposes of illustrating some exemplary embodiments to provide a basic understanding of some aspects of the subject matter described herein. Accordingly, it will be appreciated that the above-described features are examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE FIGURES

FIG. 1 is a block diagram illustrating an example of communication among electronic devices in accordance with an embodiment of the present disclosure.
FIG. 2 is a flow diagram illustrating an example of a method for providing information in accordance with an embodiment of the present disclosure.
FIG. 3 is a drawing illustrating an example of communication between an electronic device, an access point and a controller or a computer system in FIG. 1 in accordance with an embodiment of the present disclosure.
FIG. 4 is a block diagram illustrating an example of an electronic device in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

During operation, an access point (and, more generally, a computer network device) may receive, associated with an electronic device, a frame with information specifying a capability of the electronic device, where the capability includes whether the electronic device is compatible with an IEEE 802.11 standard or a Wi-Fi Alliance generation, and the access point is unable to interpret the information. Then, the access point may provide, addressed to a computer system (such as a cloud-based controller of the access point), the information. In some embodiments, the access point may provide, addressed to the computer system, an identifier of the electronic device and/or one or more attributes of the electronic device.

By conveying the information to the computer system, these communication techniques may allow the access point (or the computer network device) to provide situational awareness to the computer system (and, more generally, an operator of the access point or a WLAN that includes the access point). This capability may allow the access point and/or the WLAN to be upgraded in a timely manner (such as when electronic devices that are compatible with a more-recent IEEE 802.11 standard than the access point) become available and in use. Consequently, the communication techniques may help ensure that the access point and/or the WLAN have appropriate capabilities to match those of the electronic device and, thus, clients or customers that use the access point and/or the WLAN.

In the discussion that follows, electronic devices or components in a system communicate packets in accordance with a wireless communication protocol, such as: a wireless communication protocol that is compatible with an IEEE 802.11 standard (which is sometimes referred to as 'Wi-Fi^{®},' from the Wi-Fi Alliance of Austin, Texas), Bluetooth or Bluetooth low energy (BLE), an IEEE 802.15.4 standard (which is sometimes referred to as Zigbee), a low-power wide-area network (LoRaWAN), a cellular-telephone network or data network communication protocol (such as a third generation or 3G communication protocol, a fourth generation or 4G communication protocol, e.g., Long Term Evolution or LTE or 5GC (from the 3rd Generation Partnership Project of Sophia Antipolis, Valbonne, France), LTE Advanced or LTE-A, a fifth generation or 5G communication protocol, or other present or future developed advanced cellular communication protocol), and/or another type of wireless interface (such as another wireless-local-area-network interface). For example, an IEEE 802.11 standard may include one or more of: IEEE 802.11a, IEEE 802.11b, IEEE 802.11g, IEEE 802.11-2007, IEEE 802.11n, IEEE 802.11-2012, IEEE 802.11-2016, IEEE 802.11ac, IEEE 802.1 1ax, IEEE 802.1 1ba, IEEE 802.1 1be, or other present or future developed IEEE 802.11 technologies. More generally, the disclosed communication techniques may be compatible with one or more Wi-Fi Alliance generations, such as Wi-Fi 5, Wi-Fi 6, Wi-Fi 7 or a future Wi-Fi Alliance generation. Moreover, an access point, a radio node, a base station or a switch in the wireless network and/or the cellular-telephone network may communicate with a local or remotely located computer (such as a controller) using a wired communication protocol, such as a wired communication protocol that is compatible with an IEEE 802.3 standard (which is sometimes referred to as `Ethernet'), e.g., an Ethernet II standard. However, a wide variety of communication protocols may be used in the system, including wired and/or wireless communication. In the discussion that follows, Wi-Fi and Ethernet are used as illustrative examples.

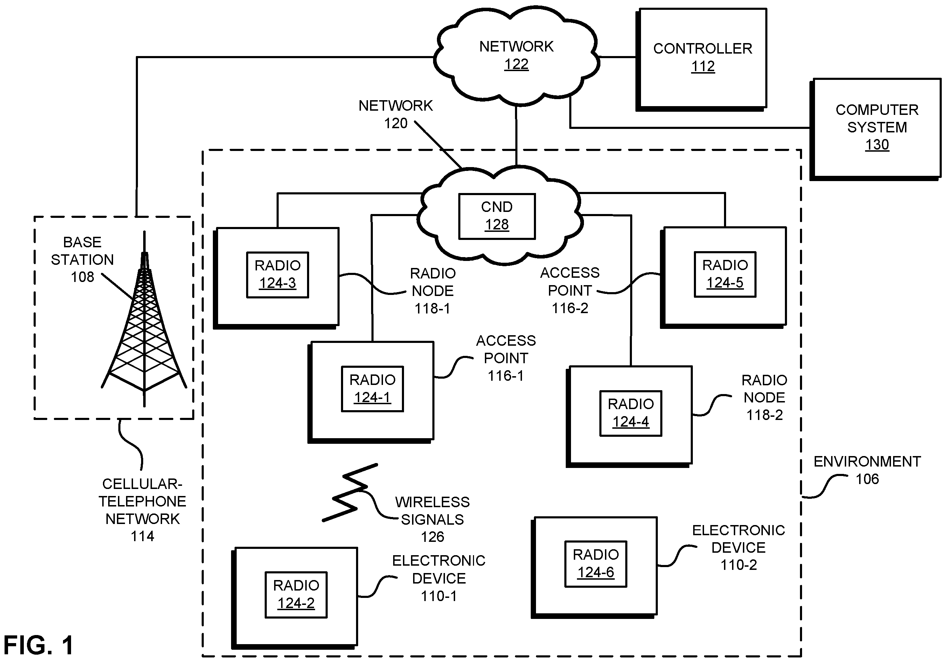

We now describe some embodiments of the communication techniques. FIG. 1 presents a block diagram illustrating an example of communication in an environment 106 with one or more electronic devices 110 (such as cellular telephones, portable electronic devices, stations or clients, another type of electronic device, etc.) via a macrocell in a cellular-telephone network 114 (which may include a base station 108), one or more access points 116 (which may communicate using Wi-Fi) in a WLAN and/or one or more radio nodes 118 (which may communicate using LTE) in another cellular-telephone network (such as a small-scale network or a small cell). For example, the one or more radio nodes 118 may include: an Evolved Node B (eNodeB), a Universal Mobile Telecommunications System (UMTS) NodeB and radio network controller (RNC), a New Radio (NR) gNB or gNodeB (which communicates with a network with a cellular-telephone communication protocol that is other than LTE), etc. In the discussion that follows, an access point, a radio node or a base station are sometimes referred to generically as a `computer network device.' Moreover, one or more base stations (such as base station 108), access points 116, and/or radio nodes 118 may be included in one or more wireless networks, such as: a WLAN and/or a cellular-telephone network. In some embodiments, access points 116 may include a physical access point and/or a virtual access point that is implemented in software in an environment of an electronic device or a computer.

Note that access points 116 and/or radio nodes 118 may communicate with each other and/or controller 112 (which may be a local or a cloud-based controller that manages and/or configures access points 116, radio nodes 118 and/or a computer network device (CND) 128, or that provides cloud-based storage and/or analytical services) using a wired communication protocol (such as Ethernet) via network 120 and/or 122. Alternatively, or additionally, access points 116 and/or radio nodes 118 may communicate with computer system 130 (which may include one or more computers at one or more locations) using the wired communication protocol. However, in some embodiments, access points 116 and/or radio nodes 118 may communicate with each other, controller 112 and/or computer system 130 using wireless communication (e.g., one of access points 116 may be a mesh access point in a mesh network). Note that networks 120 and 122 may be the same or different networks. For example, networks 120 and/or 122 may an LAN, an intra-net or the Internet. In some embodiments, network 120 may include one or more routers and/or switches (such as computer network device 128).

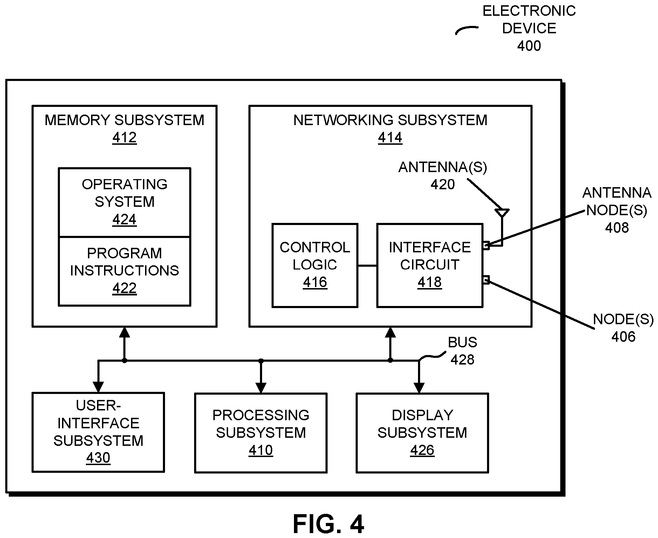

As described further below with reference to FIG. 4, electronic devices 110, controller 112, access points 116, radio nodes 118, computer network device 128, and/or computer system 130 may include subsystems, such as a networking subsystem, a memory subsystem and a processor subsystem. In addition, electronic devices 110, access points 116 and radio nodes 118 may include radios 124 in the networking subsystems. More generally, electronic devices 110, access points 116 and radio nodes 118 can include (or can be included within) any electronic devices with the networking subsystems that enable electronic devices 110, access points 116 and radio nodes 118 to wirelessly communicate with one or more other electronic devices. This wireless communication can comprise transmitting access on wireless channels to enable electronic devices to make initial contact with or detect each other, followed by exchanging subsequent data/management frames (such as connection requests and responses) to establish a connection, configure security options, transmit and receive frames or packets via the connection, etc.

During the communication in FIG. 1, access points 116 and/or radio nodes 118 and electronic devices 110 may wired or wirelessly communicate while: transmitting access requests and receiving access responses on wireless channels, detecting one another by scanning wireless channels, establishing connections (for example, by transmitting connection requests and receiving connection responses), and/or transmitting and receiving frames or packets (which may include information as payloads).

As can be seen in FIG. 1, wireless signals 126 (represented by a jagged line) may be transmitted by radios 124 in, e.g., access points 116 and/or radio nodes 118 and electronic devices 110. For example, radio 124-1 in access point 116-1 may transmit information (such as one or more packets or frames) using wireless signals 126. These wireless signals are received by radios 124 in one or more other electronic devices (such as radio 124-2 in electronic device 110-1). This may allow access point 116-1 to communicate information to other access points 116 and/or electronic device 110-1. Note that wireless signals 126 may convey one or more packets or frames.

In the described embodiments, processing a packet or a frame in access points 116 and/or radio nodes 118 and electronic devices 110 may include: receiving the wireless signals with the packet or the frame; decoding/extracting the packet or the frame from the received wireless signals to acquire the packet or the frame; and processing the packet or the frame to determine information contained in the payload of the packet or the frame.

Note that the wireless communication in FIG. 1 may be characterized by a variety of performance metrics, such as: a data rate for successful communication (which is sometimes referred to as 'throughput'), an error rate (such as a retry or resend rate), a mean-squared error of equalized signals relative to an equalization target, intersymbol interference, multipath interference, a signal-to-noise ratio, a width of an eye pattern, a ratio of number of bytes successfully communicated during a time interval (such as 1-10 s) to an estimated maximum number of bytes that can be communicated in the time interval (the latter of which is sometimes referred to as the 'capacity' of a communication channel or link), and/or a ratio of an actual data rate to an estimated data rate (which is sometimes referred to as `utilization'). While instances of radios 124 are shown in components in FIG. 1, one or more of these instances may be different from the other instances of radios 124.

As discussed previously, it can be difficult to know the capabilities of an electronic device (such as electronic device 110-1). In order to address this problem, in the discussed communication techniques an access point (such as access point 116-1) may provide information to controller 112 and/or computer system 130. Notably, electronic device 110-1 may provide, to access point 116-1, a frame with the information specifying a capability of electronic device 110-1. For example, the frame may include a probe request or an association request. Moreover, the information may indicate a capability of electronic device 110-1, such as whether electronic device 110-1 is compatible with an IEEE 802.11 standard. Furthermore, the information may be included in an IE and/or the IE may include a high-efficiency field in the frame. Additionally, the information may include one or more reserved bits in the frame. In some embodiments, the frame is provided to access point 116-1 during association.

After receiving the frame, access point 116-1 may be unable to interpret the information. For example, electronic device 110-1 may be compatible with a more-recent IEEE 802.11 standard than access point 116-1. Consequently, access point 116-1 may provide the information to controller 112 and/or computer system 130.

Moreover, access point 116-1 may provide, addressed to controller 112 and/or computer system 130, an identifier of electronic device 110-1. For example, the identifier may include a MAC address of electronic device 110-1. Alternatively or additionally, access point 116-1 may provide one or more attributes of electronic device 110-1, such as: a manufacturer of electronic device 110-1, a model of electronic device 110-1, an operating system of electronic device 110-1, etc.

In some embodiments, wireless communication between components in FIG. 1 uses one or more bands of frequencies, such as, but not limited to: 900 MHz, 2.4 GHz, 5 GHz, 6 GHz, 7 GHz, 60 GHz, the Citizens Broadband Radio Spectrum or CBRS (e.g., a frequency band near 3.5 GHz), and/or a band of frequencies used by LTE or another cellular-telephone communication protocol or a data communication protocol. Note that the communication between electronic devices may use multi-user transmission (such as orthogonal frequency division multiple access or OFDMA) and/or multiple input, multiple output (MIMO) communication.

Although we describe the network environment shown in FIG. 1 as an example, in alternative embodiments, different numbers or types of electronic devices may be present. For example, some embodiments comprise more or fewer electronic devices. As another example, in another embodiment, different electronic devices are transmitting and/or receiving packets or frames.

Note that, while FIG. 1 illustrates controller 112 and computer system 130 as separate components, in other embodiments these components may be combined into a single component. Thus, in some embodiments, computer system 130 may be a controller.

While the preceding discussion illustrated the communication of the information (such as a Wi-Fi Alliance Capabilities element) from electronic device 110-1 to access point 116 in a frame during association, in other embodiments the information may be communicated in a frame after association. For example, the information may be communicated in an Action frame or a protected frame. In some embodiments, the information may include a generational capabilities indication.

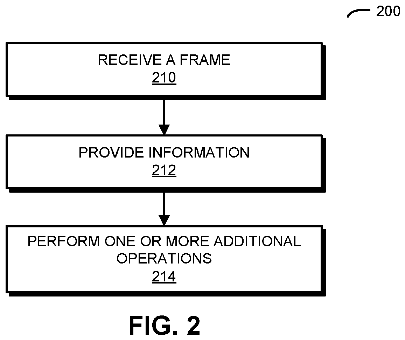

FIG. 2 presents an example of a method 200 for providing information, which may be performed by an access point, such as access point 116-1.

During operation, the access point receives, associated with the electronic device, a frame (operation 210) with information specifying a capability of the electronic device, where the capability comprises whether the electronic device is compatible with an IEEE 802.11 standard, and where the access point is unable to interpret the information. Then, the access point provides, addressed to a computer system, the information (operation 212).

Note that the frame may be received during association between the electronic device and the access point. For example, the frame may include an association request. Alternatively, the frame may include a probe request.

Moreover, the information may be included in an IE. For example, the IE may include a high-efficiency field in the frame. Furthermore, the information may include one or more reserved bits in the frame.

Additionally, the electronic device may be compatible with a more-recent IEEE 802.11 standard than the access point.

In some embodiments, the computer system may include a controller of the access point. More generally, the computer system may include a cloud-based computer system.

In some embodiments, the access point may optionally perform one or more additional operations (operation 214). For example, the access point may provide, addressed to the computer system, an identifier of the electronic device. For example, the identifier may include a MAC address of the electronic device. Alternatively or additionally, the access point may provide one or more attributes of the electronic device, such as: a manufacturer of the electronic device, a model of the electronic device, an operating system of the electronic device, etc. Note that the identifier and/or the one or more attributes may be included in the frame and/or in a second frame, which is different from the frame.

In some embodiments of method 200, there may be additional or fewer operations. Furthermore, the order of the operations may be changed, and/or two or more operations may be combined into a single operation.

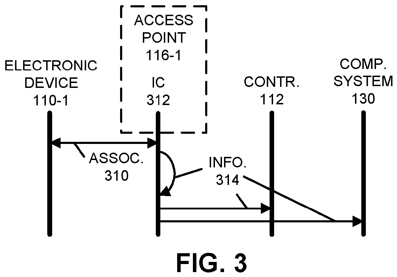

Embodiments of the communication techniques are further illustrated in FIG. 3, which presents a drawing illustrating an example of communication between access point 116-1, electronic device 110-1 and controller 112 or computer system 130.

Electronic device 110-1 may associate 310 with access point 116-1. For example, during association 310, electronic device 110-1 may provide an association request or a probe request to an interface circuit 312 in access point 110-1.

During association 310, electronic device 110-1 may provide a frame to interface circuit 312. This frame may include information 314 specifying a capability of electronic device 110-1. Notably, the capability may include whether electronic device 110-1 is compatible with an IEEE 802.11 standard (such as IEEE 802.1 The or IEEE 802.11bn), and where access point 116-1 is unable to interpret information 314. For example, access point 116-1 may not be compatible with an IEEE 802.11 standard used by electronic device 110-1, such that the frame includes fields that access point 116-1 cannot interpret or decode. Consequently, interface circuit 312 may provide, addressed to controller 112 or computer system 130, information 314 (e.g., in a packet or another frame).

While FIG. 3 illustrates communication between components using unidirectional or bidirectional communication with lines having single arrows or double arrows, in general the communication in a given operation in this figure may involve unidirectional or bidirectional communication. Moreover, while FIG. 3 illustrates operations being performed sequentially or at different times, in other embodiments at least some of these operations may, at least in part, be performed concurrently or in parallel.

We now further describe the communication techniques. In order for a network to get the benefits of advanced protocols, both the client and the access point must be certified for those protocols. AWi-Fi 6 client won't get any additional Wi-Fi benefits communicating with a Wi-Fi 5 access point. Some protocol advances only become beneficial once a critical number of clients share that protocol. For example, OFDMA and Mu-Mimo only provide benefits in the presence of other OFDMA and Mu-Mimo clients. Because of this fact, it is often valuable for network operators to know the numbers and capabilities of electronic devices connecting to their network. Network equipment would like to let the network operator know when a critical mass of clients with new capabilities is present and when it might be valuable for the network operator to upgrade their network.

At what point would upgrading access points be beneficial to overall network performance? The performance impact typically can only be understood only when we know the number of advanced clients, even when the network is operating with lower-grade or lower-capability access points. Unfortunately, it can be very challenging for a lower-standard Wi-Fi5 access point to know it is talking to a more advanced Wi-Fi 6, Wi-Fi 6E, or Wi-Fi 7 client.

Currently, at the time of association, the association request from a client may eliminate advanced IEs from their association request. Typically, the clients see that high efficiency (HE) and extremely high efficiency (EHT) elements are missing from the access point beacon and/or probe response and then eliminate those elements from their association request. In some embodiments, current practice is to look at earlier received probe requests to try to match advanced IEs in the earlier probe requests and their MAC addresses with the MAC addresses of currently associating clients.

However, this approach is often not robust. Notably, clients may use MAC address randomization during the probing process, which may obscure the relationship between the probe requests with advanced IEs and the actual client associations. Additionally, a client may passively scan for networks by only looking at the beacon and may never send a probe request prior to association. This approach is also problematic because every time a new wireless standard is developed, new firmware usually needs to be developed to positively identify the newest IEs in the new wireless standard and to pass along that information to an aggregation engine where proper statistics can be gathered. Typically, access points drop any IEs that they do not understand. Thus, when Wi-Fi 6 is developed, new software may be written and deployed to the existing Wi-Fi 5 access points to detect and report Wi-Fi 6 devices. Similarly, when Wi-Fi 7 is developed, new software may again be written and deployed to the Wi-Fi 5 access points to detect and differentiate between theWi-Fi 6 and Wi-Fi 7 clients.

In the disclosed communication techniques, an IE may be included in an association request and/or a probe request. This IE may indicate the capabilities (such as compatibility with a particular IEEE 802.11 standard) of an electronic device. For example, one or more bits may be set in a bitmap or bitmask that is included in the association request and/or the probe request. Note that the term Wi-Fi # (where # denotes a non-zero integer) may encompass a wide variety of separate standards capabilities all brought together under one umbrella term, such as Wi-Fi 6, Wi-Fi 7, etc. The IE in the communication techniques may not include or specify all the details of, e.g., the Wi-Fi 6 capabilities. Instead, it may indicate whether an electronic device is Wi-Fi 6 capable or not, Wi-Fi 6E or not, etc. Moreover, the IE may not change from standards release to standards release. Instead, it may be the same IE and only the data indicating the capabilities of a client may change with each release. Furthermore, the communication technique may allow the software in the access point to only be written once to pass along the data in the IE to the aggregation service (such as a cloud-based computer system). Each time a new standard is released, the same access-point software may still work. Only the aggregator software processing may be changed to reinterpret the newest standard information.

In some embodiments, the network operator may want to detect or determine the client capabilities, so they can upgrade equipment at the right time. However, when a station or client has higher capabilities than an access point (such as a Wi-Fi 5 access point and a Wi-Fi 6 station), the access point may not be able to interpret IEs that specify the capabilities of the station or client. Instead, the access point may ignore these IEs. In the disclosed communication techniques, an IE may be used during association (such as in an association request) or a probe request to indicate or specify the IEEE 802.11 standard capabilities of the station or client. The access point may not be able to understand or interpret this IE. However, the access point may provide information specifying the IEEE 802.11 standard capabilities of the station or client to a cloud-based computer system, such as a controller of the access point (which may configure and/or manage the access point) or an analytics service.

We now describe embodiments of an electronic device, which may perform at least some of the operations in the communication techniques. FIG. 4 presents a block diagram illustrating an example of an electronic device 400 in accordance with some embodiments, such as one of: base station 108, one of electronic devices 110, controller 112, one of access points 116, one of radio nodes 118, or computer system 130. This electronic device includes processing subsystem 410, memory subsystem 412, and networking subsystem 414. Processing subsystem 410 includes one or more devices configured to perform computational operations. For example, processing subsystem 410 can include one or more microprocessors, graphics processing units (GPUs), ASICs, microcontrollers, programmable-logic devices, and/or one or more digital signal processors (DSPs).

Memory subsystem 412 includes one or more devices for storing data and/or instructions for processing subsystem 410 and networking subsystem 414. For example, memory subsystem 412 can include DRAM, static random access memory (SRAM), and/or other types of memory. In some embodiments, instructions for processing subsystem 410 in memory subsystem 412 include: one or more program modules or sets of instructions (such as program instructions 422 or operating system 424, such as Linux, UNIX, Windows Server, or another customized and proprietary operating system), which may be executed by processing subsystem 410. Note that the one or more computer programs, program modules or instructions may constitute a computer-program mechanism. Moreover, instructions in the various modules in memory subsystem 412 may be implemented in: a high-level procedural language, an object-oriented programming language, and/or in an assembly or machine language. Furthermore, the programming language may be compiled or interpreted, e.g., configurable or configured (which may be used interchangeably in this discussion), to be executed by processing subsystem 410.

In addition, memory subsystem 412 can include mechanisms for controlling access to the memory. In some embodiments, memory subsystem 412 includes a memory hierarchy that comprises one or more caches coupled to a memory in electronic device 400. In some of these embodiments, one or more of the caches is located in processing subsystem 410.

In some embodiments, memory subsystem 412 is coupled to one or more high-capacity mass-storage devices (not shown). For example, memory subsystem 412 can be coupled to a magnetic or optical drive, a solid-state drive, or another type of mass-storage device. In these embodiments, memory subsystem 412 can be used by electronic device 400 as fast-access storage for often-used data, while the mass-storage device is used to store less frequently used data.

Networking subsystem 414 includes one or more devices configured to couple to and communicate on a wired and/or wireless network (i.e., to perform network operations), including: control logic 416, an interface circuit 418 and one or more antennas 420 (or antenna elements). (While FIG. 4 includes one or more antennas 420, in some embodiments electronic device 400 includes one or more nodes, such as antenna nodes 408, e.g., a metal pad or a connector, which can be coupled to the one or more antennas 420, or nodes 406, which can be coupled to a wired or optical connection or link. Thus, electronic device 400 may or may not include the one or more antennas 420. Note that the one or more nodes 406 and/or antenna nodes 408 may constitute input(s) to and/or output(s) from electronic device 400.) For example, networking subsystem 414 can include a Bluetooth networking system, a cellular networking system (e.g., a 3G/4G/5G network such as UMTS, LTE, etc.), a universal serial bus (USB) networking system, a coaxial interface, a High-Definition Multimedia Interface (HDMI) interface, a networking system based on the standards described in IEEE 802.11 (e.g., a Wi-Fi^{®} networking system), an Ethernet networking system, and/or another networking system.

Note that a transmit or receive antenna pattern (or antenna radiation pattern) of electronic device 400 may be adapted or changed using pattern shapers (such as directors or reflectors) and/or one or more antennas 420 (or antenna elements), which can be independently and selectively electrically coupled to ground to steer the transmit antenna pattern in different directions. Thus, if one or more antennas 420 include N antenna pattern shapers, the one or more antennas may have 2^{N} different antenna pattern configurations. More generally, a given antenna pattern may include amplitudes and/or phases of signals that specify a direction of the main or primary lobe of the given antenna pattern, as well as so-called `exclusion regions' or `exclusion zones' (which are sometimes referred to as 'notches' or `nulls'). Note that an exclusion zone of the given antenna pattern includes a low-intensity region of the given antenna pattern. While the intensity is not necessarily zero in the exclusion zone, it may be below a threshold, such as 3dB or lower than the peak gain of the given antenna pattern. Thus, the given antenna pattern may include a local maximum (e.g., a primary beam) that directs gain in the direction of electronic device 400 that is of interest, and one or more local minima that reduce gain in the direction of other electronic devices that are not of interest. In this way, the given antenna pattern may be selected so that communication that is undesirable (such as with the other electronic devices) is avoided to reduce or eliminate adverse effects, such as interference or crosstalk.

Networking subsystem 414 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a `network interface' for the network system. Moreover, in some embodiments a 'network' or a 'connection' between the electronic devices does not yet exist. Therefore, electronic device 400 may use the mechanisms in networking subsystem 414 for performing simple wireless communication between the electronic devices, e.g., transmitting advertising or beacon frames and/or scanning for advertising frames transmitted by other electronic devices as described previously.

Within electronic device 400, processing subsystem 410, memory subsystem 412, and networking subsystem 414 are coupled together using bus 428. Bus 428 may include an electrical, optical, and/or electro-optical connection that the subsystems can use to communicate commands and data among one another. Although only one bus 428 is shown for clarity, different embodiments can include a different number or configuration of electrical, optical, and/or electro-optical connections among the subsystems.

In some embodiments, electronic device 400 includes a display subsystem 426 for displaying information on a display, which may include a display driver and the display, such as a liquid-crystal display, a multi-touch touchscreen, etc.

Moreover, electronic device 400 may include a user-interface subsystem 430, such as: a mouse, a keyboard, a trackpad, a stylus, a voice-recognition interface, and/or another human-machine interface. In some embodiments, user-interface subsystem 430 may include or may interact with a touch-sensitive display in display subsystem 426.

Electronic device 400 can be (or can be included in) any electronic device with at least one network interface. For example, electronic device 400 can be (or can be included in): a desktop computer, a laptop computer, a subnotebook/netbook, a server, a tablet computer, a cloud-based computing system, a smartphone, a cellular telephone, a smartwatch, a wearable electronic device, a consumer-electronic device, a portable computing device, an access point, a transceiver, a router, a switch, communication equipment, an eNodeB, a controller, test equipment, and/or another electronic device.

Although specific components are used to describe electronic device 400, in alternative embodiments, different components and/or subsystems may be present in electronic device 400. For example, electronic device 400 may include one or more additional processing subsystems, memory subsystems, networking subsystems, and/or display subsystems. Additionally, one or more of the subsystems may not be present in electronic device 400. Moreover, in some embodiments, electronic device 400 may include one or more additional subsystems that are not shown in FIG. 4. Also, although separate subsystems are shown in FIG. 4, in some embodiments some or all of a given subsystem or component can be integrated into one or more of the other subsystems or component(s) in electronic device 400. For example, in some embodiments instructions 422 is included in operating system 424 and/or control logic 416 is included in interface circuit 418.

Moreover, the circuits and components in electronic device 400 may be implemented using any combination of analog and/or digital circuitry, including: bipolar, PMOS and/or NMOS gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit (which is sometimes referred to as a `communication circuit') may implement some or all of the functionality of networking subsystem 414 and/or of electronic device 400. The integrated circuit may include hardware and/or software mechanisms that are used for transmitting wireless signals from electronic device 400 and receiving signals at electronic device 400 from other electronic devices. Aside from the mechanisms herein described, radios are generally known in the art and hence are not described in detail. In general, networking subsystem 414 and/or the integrated circuit can include any number of radios. Note that the radios in multiple-radio embodiments function in a similar way to the described single-radio embodiments.

In some embodiments, networking subsystem 414 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein comprises receiving signals from other electronic devices and possibly performing one or more processing operations on the received signals)

In some embodiments, an output of a process for designing the integrated circuit, or a portion of the integrated circuit, which includes one or more of the circuits described herein may be a computer-readable medium such as, for example, a magnetic tape, an optical, a magnetic disk or a solid-state disk. The computer-readable medium may be encoded with data structures or other information describing circuitry that may be physically instantiated as the integrated circuit or the portion of the integrated circuit. Although various formats may be used for such encoding, these data structures are commonly written in: Caltech Intermediate Format (CIF), Calma GDS II Stream Format (GDSII) or Electronic Design Interchange Format (EDIF), OpenAccess (OA), or Open Artwork System Interchange Standard (OASIS). Those of skill in the art of integrated circuit design can develop such data structures from schematics of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used Wi-Fi and/or Ethernet communication protocols as illustrative examples, in other embodiments a wide variety of communication protocols and, more generally, communication techniques may be used. Thus, the communication techniques may be used in a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations in the communication techniques may be implemented using program instructions 422, operating system 424 (such as a driver for interface circuit 418) or in firmware in interface circuit 418. Alternatively, or additionally, at least some of the operations in the communication techniques may be implemented in a physical layer, such as hardware in interface circuit 418.

Note that the use of the phrases `capable of,' `capable to,' `operable to,' or `configured to' in one or more embodiments, refers to some apparatus, logic, hardware, and/or element designed in such a way to enable use of the apparatus, logic, hardware, and/or element in a specified manner.

While examples of numerical values are provided in the preceding discussion, in other embodiments different numerical values are used. Consequently, the numerical values provided are not intended to be limiting.

In the preceding description, we refer to 'some embodiments.' Note that `some embodiments' describes a subset of all of the possible embodiments, but does not always specify the same subset of embodiments.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed.

## Claims

1. An access point (116-1), comprising:
an interface circuit (418) configured to communicate with an electronic device (110-1) and a computer system (112 or 130), wherein the access point is configured to:
receive (210), associated with the electronic device, a frame with information (314) specifying a capability of the electronic device, wherein the capability comprises whether the electronic device is compatible with an Institute of Electrical and Electronics Engineers (IEEE) 802.11 standard or a Wi-Fi Alliance generation, and wherein the access point is unable to interpret the information; and
provide (212), addressed to the computer system, the information.

2. The access point of claim 1, wherein the frame is received during association (310) between the electronic device and the access point.

3. The access point of any preceding claim, wherein the frame comprises an association request.

4. The access point of any one of claims 1-2, wherein the frame comprises a probe request.

5. The access point of claim 1, wherein the frame comprises an Action frame or a protected frame.

6. The access point of any preceding claim, wherein the information is included in an information element (IE).

7. The access point of claim 6, wherein the IE comprises a high-efficiency field in the frame.

8. The access point of any preceding claim, wherein the information comprises one or more reserved bits in the frame.

9. The access point of any preceding claim, wherein the electronic device is compatible with a more-recent IEEE 802.11 standard or a more-recent Wi-Fi Alliance generation than the access point.

10. The access point of any preceding claim, wherein the computer system comprises a controller of the access point.

11. The access point of any preceding claim, wherein the computer system comprises a cloud-based computer system.

12. The access point of any preceding claim, wherein the access point is configured to provide, addressed to the computer system, an identifier of the electronic device, one or more attributes of the electronic device, or both.

13. The access point of claim 12, wherein the identifier comprises a media access control (MAC) address of the electronic device.

14. A non-transitory computer-readable storage medium (412) for use in conjunction with an access point (116-1), the computer-readable storage medium storing program instructions (422) that, when executed by the access point, cause the access point to perform operations comprising:
receiving (210), associated with an electronic device (110-1), a frame with information (314) specifying a capability of the electronic device, wherein the capability comprises whether the electronic device is compatible with an Institute of Electrical and Electronics Engineers (IEEE) 802.11 standard or a Wi-Fi Alliance generation, and wherein the access point is unable to interpret the information; and
providing (212), addressed to a computer system (112 or 130), the information.

15. A method (200) for providing information (314), comprising:
by an access point (116-1):
receiving (210), associated with an electronic device (110-1), a frame with the information specifying a capability of the electronic device, wherein the capability comprises whether the electronic device is compatible with an Institute of Electrical and Electronics Engineers (IEEE) 802.11 standard or a Wi-Fi Alliance generation, and wherein the access point is unable to interpret the information; and
providing (212), addressed to a computer system (112 or 130), the information.
